# EUROPÄISCHE PATENTSCHRIFT

(11) **EP 1 553 329 B1**
(45) Veröffentlichungstag und Bekanntmachung des Hinweises auf die Patenterteilung: **03.01.2007**
(21) Anmeldenummer: 04000410.3
(22) Anmeldetag: 12.01.2004
(51) Int. Cl.: F16H 53/02, F01L 1/047, B23P 11/00, B21D 53/84

(54) **Anordnung und Verfahren zum Herstellen einer Nockenwelle**
Apparatus and method for manufactoring a cam shaft
Appareil et méthode pour fabrique une arbre de cames

(43) Veröffentlichungstag der Anmeldung: 13.07.2005
(73) Patentinhaber: Bürgler, Robert, 9491 Ruggell (LI)
(72) Erfinder: Bürgler, Robert, 9491 Ruggell (LI)
(74) Vertreter: Hepp, Dieter

(56) Entgegenhaltungen:
- EP-A- 0 486 876
- EP-A- 0 892 156
- EP-A- 1 058 033
- WO-A-99/57450
- US-A- 4 903 543
- US-A- 5 195 239
- US-A- 5 392 511

## Beschreibung

Die Erfindung betrifft eine Anordnung und ein Verfahren zum Herstellen einer Nockenwelle aus einer Welle und einer Anzahl von darauf aufgepressten Nocken mit den Merkmalen des Oberbegriffs der unabhängigen Ansprüche.

Es sind bereits zahlreiche Verfahren zum Herstellen von Nockenwellen durch Aufpressen von Nocken auf eine Welle bekannt. So beschreibt beispielsweise WO A1 01/94802 oder EP 1 058 033 A2 ein Verfahren, in welchem an den für die Nocken vorgesehenen Positionen die Welle durch plastische Verformung bearbeitet wird, wodurch Materialanhäufungen entstehen, ein Nocken auf diese Position aufgepresst wird, wodurch dieses Material durch den Nocken umgeformt und der Nocken auf der Welle fixiert wird.

Die EP 462 081 B1 beschreibt einen Automaten zum Presspassen von Nocken auf eine Welle. Die Nocken werden über einen Zufuhrkanal zu einem auf dem Arbeitstisch des Automaten angeordneten Montagesitz geführt. Die Welle wird dann in das Loch des Nockens eingeführt und abgesenkt. Sind die Nocken auf die Welle in unterschiedlichen Winkelorientierungen anzuordnen, so wird die Welle im Automaten um ihre eigene Achse computergesteuert gedreht. Die Welle wird gemäss dieser Schrift nicht zwischen den Press-Schritten rolliert.

DE 28 38 995 A zeigt eine Vorrichtung zum Zusammenbauen einer Nockenwelle, welche einen Drehtisch und einen die Nockenwelle tragenden Zylinder enthält, welcher die Welle durch die sich auf dem Drehtisch befindlichen Nocken hindurchbewegt. Die Nocken sind dabei in Stempeln auf dem Drehtisch fixiert. Die Anzahl Stempel entspricht dabei der Anzahl Nocken für die Nockenwelle.

Die Stempel werden vor dem Zusammenbau der Nockenwelle in die Soll-Position gebracht.

In der Praxis zeigt sich jedoch, dass die bekannten Konstruktion aufwendig sowie deren Handhabung schwierig ist. Die Kosten für die Anschaffung etwa eines vorgängig beschriebenen Rundschalttisches sind sehr hoch. Auch Änderungen der Anzahl Nocken für die zu bauende Nockenwelle oder Änderungen der Winkellage der Nocken machen die Handhabung des Rundschalttisches schwierig.

Es ist deshalb eine Aufgabe der vorliegenden Erfindung, die Nachteile des Bekannten zu vermeiden, insbesondere eine Anordnung und ein Verfahren der Eingangs genannten Art zu schaffen, welches sich durch einfache Handhabung und geringe Investitionskosten auszeichnet. Die Anordnung soll weiter eine hohe Verfügbarkeit aufweisen, eine hohe Montagegenauigkeit der Nocken für die Nockenwelle soll also gewährleistet sein. Weiter soll das Verfahren derart vereinfacht werden, dass kein Fachpersonal bei Störungen benötigt wird und Umrüstzeiten gering gehalten werden können.

Erfindungsgemäss werden diese Aufgaben mit einer Anordnung sowie einem Verfahren zum Herstellen einer Nockenwelle mit den Merkmalen des kennzeichnenden Teils der unabhängigen Ansprüche gelöst.

Die Anordnung zum Herstellen einer Nockenwelle aus einer Welle und einer Anzahl von darauf aufgepressten Nocken weist wenigstens zwei Bearbeitungsstationen auf, wobei wenigstens eine als Rollier-Station und wenigstens eine als Aufpress-Station ausgebildet ist. Durch diese Anordnung wird erreicht, dass sich aufwendige Sondermaschinen erübrigen und weitgehend Standard- bzw. Serienmaschinen als Bearbeitungsstationen angeschafft werden müssen. Eine Bearbeitungsstrasse für die Herstellung einer Nokkenwelle besteht demnach im wesentlichen aus Rollier-Stationen und Aufpress-Stationen, wodurch die Anschaffungskosten erheblich gesenkt werden können und die Anforderungen an das Bedienungsperson gering gehalten werden können. Aufgrund der geringen Investitionen ist es auch möglich, Reserveeinheiten zu halten.

Eine Welle, auf welche Nocken aufgepresst werden, weist über ein an ihr befestigtes Positionierungselement auf. Die Rollier- und Aufpress-Stationen verfügen über zum Positionierungselement korrespondierende Werkstückaufnahmen, welche der Positionierung der Welle auf die Bearbeitungsstationen dienen. Damit können die Wellen insbesondere winkelgenau in die jeweilige Bearbeitungsstationen eingebracht werden. Durch die Zuhilfenahme des Positionierungselements ist die Welle für die Positionierung einfach handhabbar und eine hohe Genauigkeit der auf die Welle aufgepressten Nocken ist gewährleistet. Die Werkstückaufnahmen der verschiedenen Bearbeitungsstationen sind in der Regel gleich ausgebildet.

Die Anordnung zum Herstellen einer Nockenwelle weist eine Mehrzahl von Rollier-Stationen und jeweils nachfolgend angeordneten Aufpress-Stationen sowie eine Manipulationseinrichtung zum Fördern der Welle jeweils von einer Bearbeitungsstation zur nachfolgenden auf. Mit Hilfe der Manipulationseinrichtung ist ein rascher Durchlauf der Welle bis zu deren Zusammenbau zu einer Nockenwelle gewährleistet. Somit können die notwendigen, verschiedenen Arbeitsschritte auch taktweise erfolgen. Dank dieser Anordnung ist auch eine flexible Gestaltung der Bearbeitungsvorgänge sowie eine schnelle Anpassung an die Anzahl der Arbeitsvorgänge gegeben, da die Anzahl Bearbeitungsstationen an die jeweiligen Bedürfnisse angepasst werden können. Eine Begrenzung der aufeinander folgenden Bearbeitungsstationen ist nicht gegeben.

In einem Ausführungsbeispiel ist das Positionierungselement als Spanndorn oder Spannfutter ausgestaltet. Diese Maschinenelemente ermöglichen es, dass das Positionierungsmittel einfach und schnell auf die Welle befestigbar ist. Die Welle ist über den ganzen Bearbeitungsprozess mit dem Spanndorn bzw. Spannfutter fest verbunden. Die Handhabung dieser Welle wird für die Bearbeitung sowie auch für die Förderung von einer Transportstation zur nächsten wesentlich vereinfacht. Für die jeweilige Bearbeitung (Rollieren oder Aufpressen) wird der Spanndorn in die korrespondierende Werkstückaufnahme der Bearbeitungsstation eingeführt und eingespannt. Vorzugsweise ist zwischen Spanndorn und der Werkstückaufnahme ein Keil einrückbar, welcher die definierte Position, insbesondere Winkelposition vorgibt; dieser kann in der Rollierstation auch dazu genutzt werden, dass der formschlüssig und/oder kraftschlüssig eingebrachte Keil das Drehmoment für die Rotation der Welle um seine Wellenachse für das Rollieren aufnimmt.

Gemäss einem weiteren Aspekt der Erfindung ist das Positionierungselement, welches an die Welle befestigbar ist, komplementär zur Welle ausgebildet. So entspricht die Aufnahme für die Welle des Spanndorns oder des Spannfutters in etwa dem Wellendurchmesser, so dass das Positionierungselement passgenau über ein Wellenabschluss gestülpt werden kann. Da über das Positionierungselement die Positionsreferenz vorgeben wird, ist eine optimale Verbindung von Welle und Positionierungselement von entscheidender Bedeutung. Das Positionierungselement wird vor dem ersten Bearbeitungsschritt bzw. vor der ersten Bearbeitungsstation im Bereich des Wellenabschlusses bzw. -endes aufgebracht. Eine Nokkenwelle kann ebenfalls über eine Positionsreferenz, beispielsweise eine Nut oder Bohrung verfügen. Diese Positionsreferenz dient auch dazu, die Nockenwelle in der richtigen Winkellage in einen Verbrennungsmotor einzubauen, womit insbesondere die Lage der Kurbelwelle und der Nockenwelle zueinander abstimmbar ist.

In einem weiteren Ausführungsbeispiel sind die Werkstückaufnahmen für alle Bearbeitungsstationen gleich ausgestaltet. Dies vereinfacht den Verfahrensablauf zum Herstellen einer Nockenwelle wesentlich. Ein weiterer Vorteil ist, dass die Kosten für die Herstellung einer Nockenwelle gesenkt werden können.

Besonders vorteilhaft ist die Schnittstelle zwischen Positionierungselement und der korrespondierenden Werkstückaufnahme derart ausgestaltet, dass durch die Verbindung ein Form- und/oder Kraftschluss vorliegt. Dadurch ist die Welle über das Positionierungselement an die Bearbeitungsstation fest eingespannt. Besonders vorteilhaft ist beispielsweise das Positionierungselement konisch ausgebildet, so dass dieses einfach in die korrespondierende Werkstückaufnahme der Bearbeitungsstation eingebracht werden kann. Zusätzlich ist ein Keil zwischen Positionierungselement und Werkstückaufnahme eindrückbar, wobei die Position des Positionierungselements die Position zweckmässig repräsentiert.

Eine Nockenwelle aus einer Welle und einer Anzahl von Nocken werden in einer Reihe von Bearbeitungsschritten auf die Welle aufgepresst. Das Herstellungsverfahren umfasst folgende Schritte: das Positionierungselement wird an die Welle befestigt, ein erster Bearbeitungsschritt umfasst dann die Befestigung der Welle mit Hilfe des Positionierungselement auf eine erste Bearbeitungsstation sowie die anschliessende Bearbeitung, in einem zweiten Bearbeitungsschritt wird die Welle mit Hilfe des Positionierungselements auf eine zweite Bearbeitungsstation befestigt und bearbeitet, wobei die Position der Welle zur Bearbeitungsstation durch das Positionierungselement vorgegeben ist.

Im ersten Bearbeitungsschritt wird die Welle rolliert. Durch das Rollieren wird die Welle im Bereich des Sitzes der später aufzubringenden Nocke plastisch verformt, wodurch der Wellendurchmesser vergrössert wird. Die Welle ist dazu in der Regel über das Positionierungselement um eine Achse A drehbar befestigt und wird über die Bearbeitungsstation angetrieben. Die Rollen der Rollierstation sind vorzugsweise frei drehend gelagert und werden in der richtigen Position gegen die Welle in Richtung der Wellenachse gedrückt.

Im zweiten Bearbeitungsschritt wird die Nocke auf die im ersten Arbeitsschritt rollierte Position aufgepresst. Dazu wird die Nocke über die Nockenöffnung auf die Welle eingeführt und in Längsrichtung bis zur richtigen Höhe bewegt.

Die Welle mit dem darauf befestigten Positionierungselement durchläuft im Verfahren zur Herstellung eine Nockenwelle wenigstens eine Rollierstation und wenigstens eine Aufpressstation. Das Herstellungsverfahren umfasst im Wesentlichen Module, welche aus jeweils einer Rollier-Station und jeweils einer Aufpress-Station bestehen. Durch diesen modularen Aufbau ist die optimale Anpassung des Verfahrens an die jeweiligen Bedürfnisse gewährleistet. Die Bearbeitungsstrasse zur Herstellung einer Nockenwelle umfasst also mindestens eine Rollierstation und mindestens eine Aufpressstation.

In einem Ausführungsbeispiel wird in einem ersten Bearbeitungsschritt die Welle auf einer Rollierstation im Bereich der für die Wellennocken vorgesehenen Position rolliert und dann in einem zweiten Schritt ein Nocken auf einer Aufpressstation in der vorgesehenen Position aufgepresst, diese beiden Schritte werden wiederholt. Dieser Zyklus wird so viele Male wiederholt, bis die letzte Nocke aufgepresst worden ist. Die Positionen für das Rollieren unterscheiden sich durch ihre Höhe in Längsrichtung der Welle; für das Aufpressen der Nocken ist die richtige Höhe und die richtige Winkellage einzuhalten. Die Nocken werden deshalb in Längsrichtung bis zur Soll-Höhe aufgepresst. Die mit Hilfe des Positionierungselements vordefinierte Lage der Welle bestimmt die Winkellage der Nocken

Vorteilhaft ist es, wenn die definierte Position zum Befestigen der Welle mit Hilfe des Positionierungselements auf eine Aufpressstation oder auf eine Rollierstation für wenigstens alle Aufpressstationen gleich ist und dass die Nocken zum Aufpressen in die richtige Winkellage gebracht werden. Da die Position zum Befestigen der Welle bei allen Aufpressstationen gleich ist, kann das Verfahren zur Herstellung einer Nockenwelle effizienter gestaltet werden. Besonders vorteilhaft ist es, wenn die definierte Position zur Befestigung der Welle für alle Aufpressstationen und für alle Rollierstationen gleich ist, da beim Fördern einer Welle von einer Bearbeitungsstation zur nächsten nur translatorische Bewegungen nötig sind und eine Drehung der Welle um ihre Achse entfällt. Die richtige Winkellage der Nocken wird beispielsweise durch einen entsprechend eingestellten Montagesitz für das Aufpressen der Nocken sichergestellt.

Alternativ kann die definierte Position zum Befestigen der Welle mit Hilfe des Positionierungselements auf die Aufpressstationen jeweils die Winkellage zum Aufpressen des Nockens vorgeben. Dazu wird beispielsweise die zum Positionierungselement korrespondierende Werkstückaufnahme der Aufpressstationen in die richtige Winkellage gebracht. Die Nocken bzw. der entsprechende Montagesitz zum Aufpressen der Nocken ist bei allen Aufpressstationen gleich ausgebildet.

Es kann besonders vorteilhaft sein, wenn das Rollieren bzw. das Aufpressen in der jeweils gleichen Rollier-Station und in der jeweils gleichen Aufpress-Station durchgeführt wird. Damit kommt der Hersteller einer Nockenwelle mit nur zwei Bearbeitungsstationen aus, wodurch die erforderlichen Investitionskosten tief gehalten werden können. Diese Verfahrensanordnung ist bei einer Herstellung von Nockenwellen mit geringer Stückzahl besonders von Vorteil.

In einem alternativen Ausführungsbeispiel wird das Herstellungsverfahren in einer Mehrzahl von Rollierstationen bzw. Aufpressstationen durchgeführt. Eine Rollierstation und eine Aufpressstation bilden hierzu ein Modul. Bearbeitungstechnisch am besten ist es, wenn die Anzahl Module der Anzahl aufzubringender Nocken entspricht. Für die Herstellung einer Nockenwelle mit beispielsweise acht aufzupressenden Nocken ist es also- bei grossen Stückzahlen - vorteilhaft auch acht Rollier-Stationen und acht Aufpressstationen zu benützen. Diese Anordnung hat den Vorteil, dass die Rollier-Station und die Aufpress-Station vor der Aufnahme einer zu bearbeitenden Welle nicht umgerüstet oder neu eingestellt werden müssen. Es kann aber z.B. für die genannte Nockenwelle mit acht Nocken auch von Vorteil sein, wenn zum Beispiel die Bearbeitungsstrasse jeweils nur je vier Bearbeitungsstationen (Rollierstation und Aufpress-Station) umfasst. Die Welle durchläuft dann diese Bearbeitungsstrasse zweimal. Diese Anordnung ist also sehr flexibel.

Das Positionierungselement kann nach dem letzten Bearbeitungsschritt von der Welle entfernt werden.

Vorteil der Verwendung des Positionierungselements ist, dass die Welle mit Hilfe des Positionierungselements eine genaue und einfach handhabbare Positionierungsreferenz verfügt, mit dessen Hilfe die Welle positionsgenau in eine voreingestellte Bearbeitungsstation eingebracht werden kann. Dies hat den Vorteil, dass auf eine zusätzliche und aufwendige Einrichtung zum Positionieren der Welle verzichtet werden kann. So muss beispielsweise eine Welle für das Aufpressen der Nocken während eines Bearbeitungsschrittes in einer Bearbeitungsstation nicht um seine Achse gedreht werden. Eine komplizierte Steuerung erübrigt sich.

Weitere Einzelmerkmale und Vorteile der Erfindung ergeben sich aus der nachfolgenden Beschreibung der Ausführungsbeispiele und aus den Zeichnungen. Es zeigen:
- Figur 1: eine schematische Seitenansicht einer erfindungsgemässen Anordnung zum Herstellen einer Nockenwelle,
- Figur 2a bis e: die vergrösserte Seitenansicht der Welle bzw. der Nockenwelle,

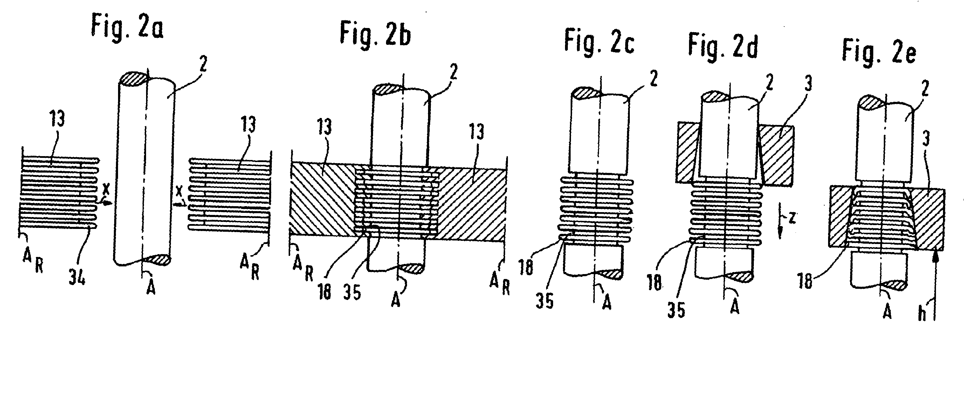

- Figur 2a: eine Welle vor dem Rollieren,
- Figur 2b: eine Welle während dem Rollieren,
- Figur 2c: eine Welle nach dem Rollieren,
- Figur 2d: eine Welle und Nocken vor dem Aufpressen,
- Figur 2e: eine Nockenwelle nach dem Aufpressen,
- Figur 3a: die vergrösserte Darstellung der Ansicht eines Nockenquerschnitts und der Welle mit Materialanhäufungen sowie Teilen der Aufpressvorrichtung vor dem Aufpressen,

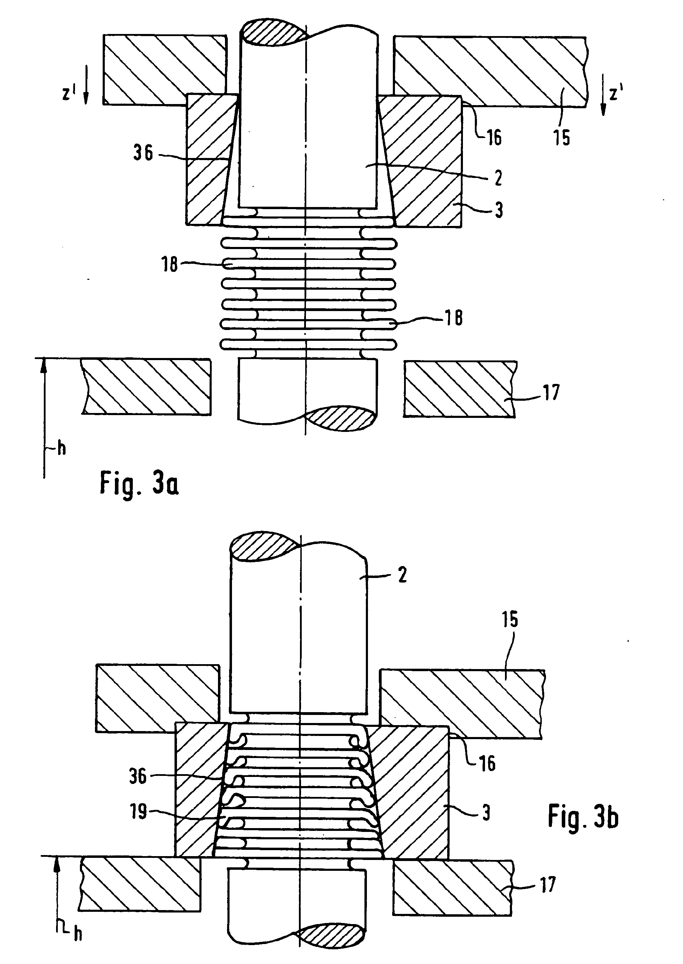

- Figur 3b: den Nockenquerschnitt mit Welle nach dem Aufpressen,

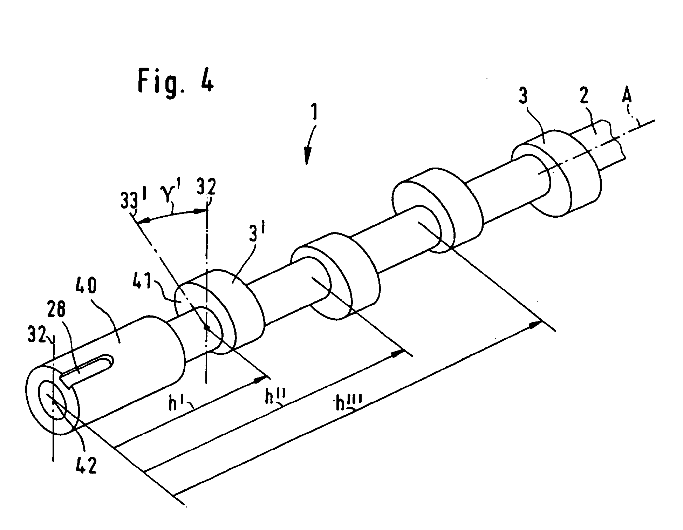

- Figur 4: die perspektivische Darstellung einer fertig gebauten Nockenwelle mit einer zusätzlichen Positionsreferenz,

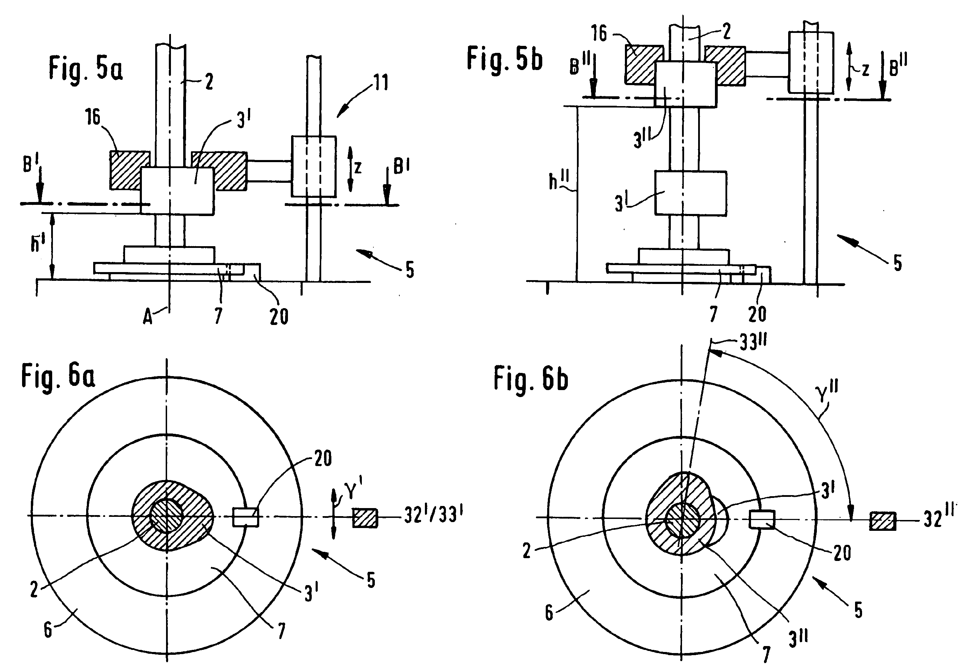

- Figur 5a: die Seitenansicht einer Aufpress-Station im Moment des Aufpressens eines ersten Nockens auf eine Welle,
- Figur 5b: die Seitenansicht einer Aufpress-Station gemäss Fig. 5a im Moment des Aufpressens eines zweiten Nockens auf eine Welle,
- Figur 6a: den Schnitt B'-B' durch eine Aufpress-Station mit einer Welle und einem ersten Nocken gemäss Fig. 5a,
- Figur 6b: den Schnitt B''-B'' durch eine Aufpress-Station mit einer Welle und zwei Nocken gemäss Fig. 5b,

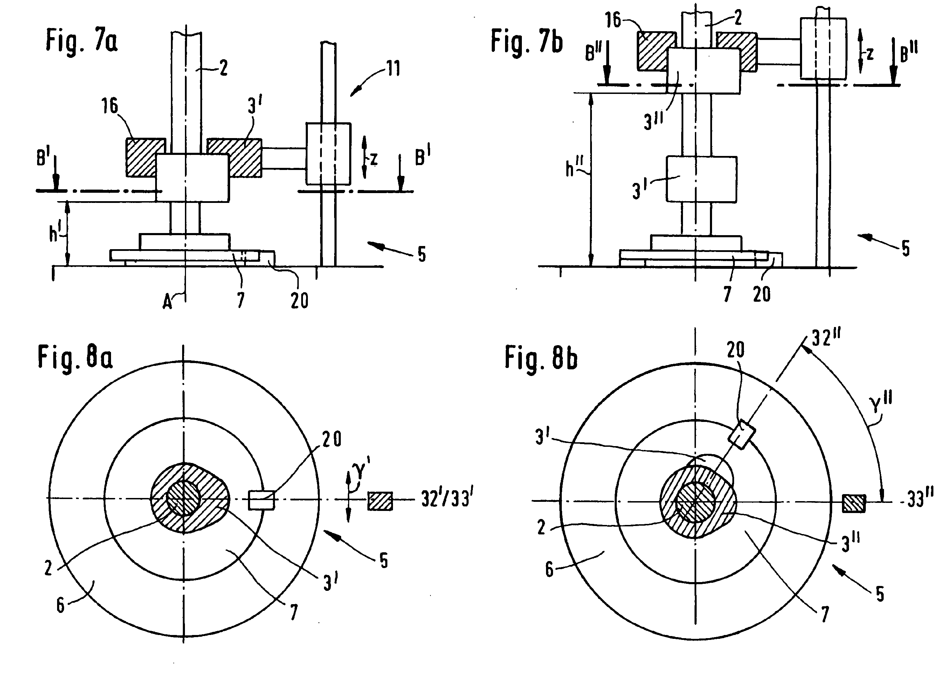

- Figuren 7a, 7b, 8a, 8b: Darstellungen einer Aufpress-Station mit Welle analog Fig. 5a bis 6b gemäss einer alternativen Ausführungsform,

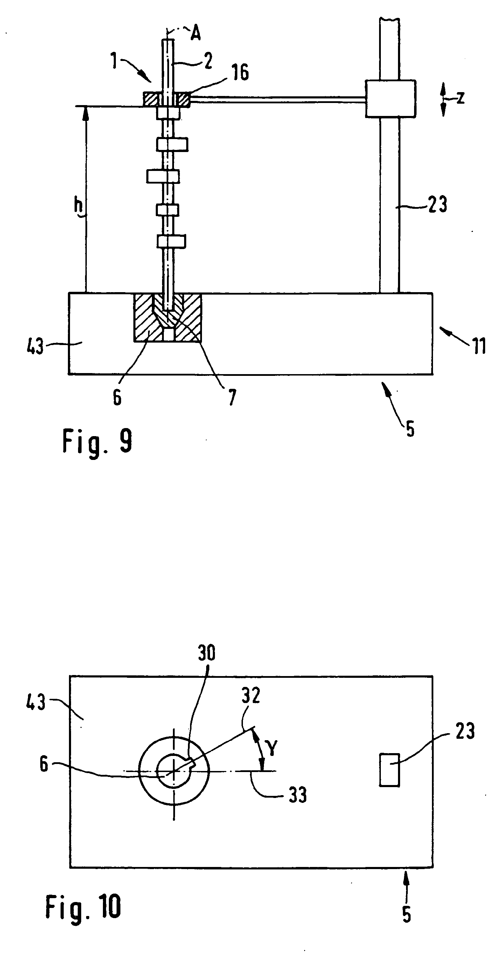

- Figur 9: die schematische Darstellung einer Seitenansicht einer Welle bzw. Nockenwelle und einer Aufpress-Station,
- Figur 10: die Draufsicht der Rollierstation aus Figur 7

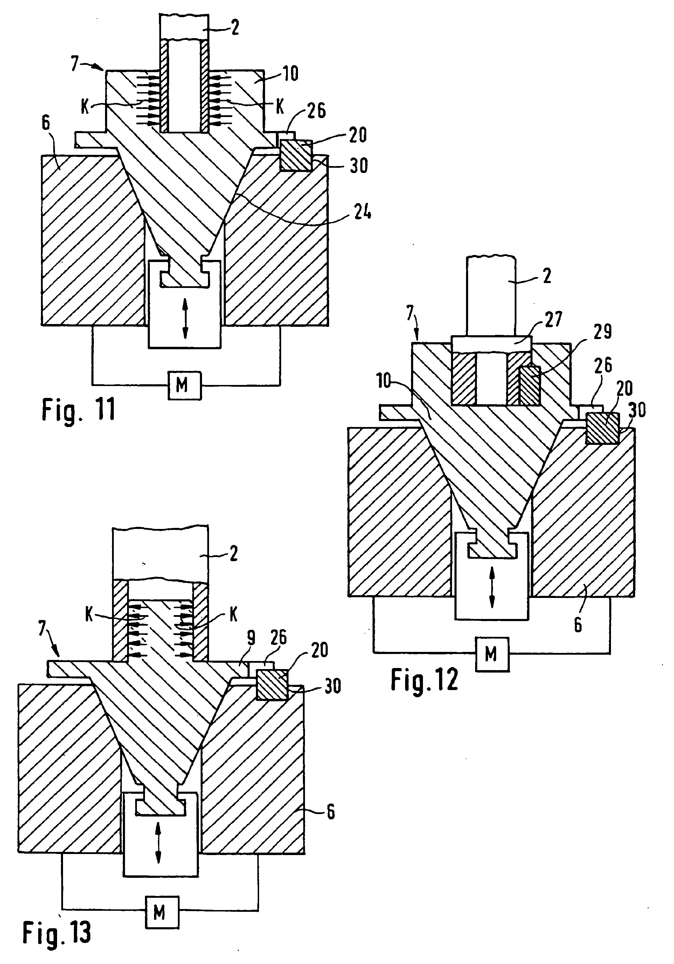

- Figur 11: die Seitenansicht mit Teilschnitt der Welle mit daran befestigtem Befestigungselement und Teilen der Bearbeitungsstation,
- Figur 12: die Seitenansicht mit Teilquerschnitt der Welle mit daran befestigten Positionierungselement sowie Teilen der Bearbeitungsstation gemäss einem weiteren Ausführungsbeispiel,
- Figur 13: die Seitenansicht mit einem Teilquerschnitt der Welle mit einem daran befestigten Spanndorn,

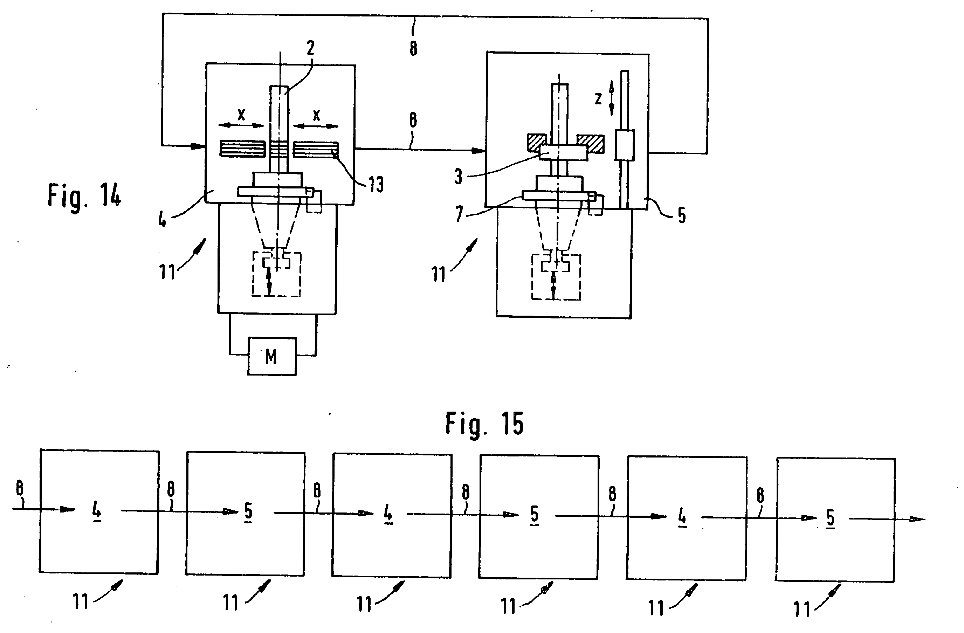

- Figur 14: eine schematische Draufsicht auf eine Anordnung zum Herstellen einer Nockenwelle mit einem Bearbeitungsmodul, im Wesentlichen bestehend aus einer Rollier- und einer Aufpress-Station, und
- Figur 15: eine schematische Draufsicht auf eine Anordnung zum Herstellen einer Nockenwelle mit einer Mehrzahl von Rollier- und Aufpress-Stationen.

Die Figuren zeigen Ausführungsbeispiele mit den Merkmalen der Erfindung in einer schematischen Darstellung; sie stellen keine exakten Grössenverhältnisse (bzw. Massangaben) dar und dienen rein zur Verdeutlichung des grundsätzlichen Prinzips.

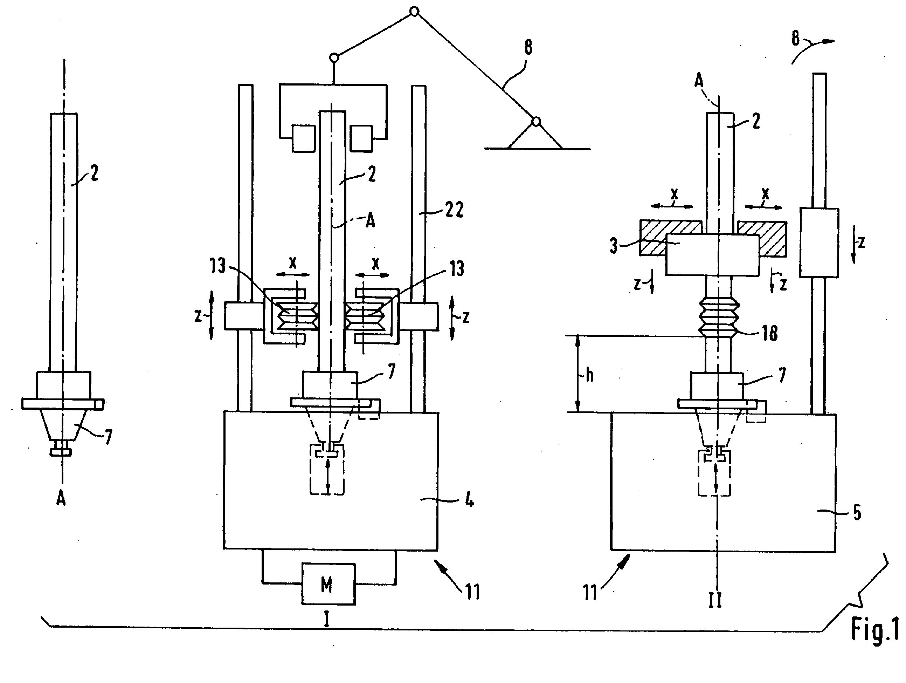

Wie in Figur 1 dargestellt, umfasst eine Bearbeitungsstrasse zum Herstellen einer Nockenwelle 1 aus einer Welle 2 und einer Anzahl von darauf aufgepressten Nocken 3 im Wesentlichen zwei Bearbeitungsstationen 11. Die Welle 2 mit einem daran befestigten Positionierungselement 7 wird über eine Manipulationseinrichtung 8 zur ersten Bearbeitungsstation 11, einer Rollier-Station 4, transportiert. Die Welle 2 ist über das Positionierungselement 7 fest in die Rollier-Station eingespannt und dort um eine Achse A drehbar befestigt. Ein Motor M, vorzugsweise ein gesteuerter Elektromotor, stellt die Drehung der Welle 2 sicher. Die Rollier-Station 4 weist Rollen 13 auf, welche in x-Richtung und z-Richtung verlagerbar sind. Während des Rolliervorgangs wird die Welle 2 sowie das daran befestigte Positionierungselement 7 um die Achse A rotiert und die Rollen 13, welche über eine Führung 22 in die richtige Höhenlage h für die aufzupressenden Nocken bewegbar sind, werden in x-Richtung gegen die Achse A gedrückt. Der Rolliervorgang dauert solange bis die gewünschten Materialanhäufungen erreicht worden sind.

Nach dem Bearbeitungsvorgang Rollieren wird die Welle 2 mit dem Positionierungselement 7 durch eine Manipulationseinrichtung 8 zur nächsten Bearbeitungsstation 11 transportiert. Bei der zweiten Bearbeitungsstation 11 handelt es sich um eine Aufpress-Station 5. Die Welle 2 wird mit Hilfe des Positionierungselements 7 in die Aufpress-Station 5 eingebracht und in einer vordefinierten Position fixiert. Die Positionierung wird noch im Detail im Zusammenhang mit den Figuren 4 bis 6 erläutert. Sodann wird der Nocken 3 in z-Richtung auf die Welle bis zur richtigen Position aufgepresst.

Nach dem Aufpressvorgang erfolgt ein weiteres Rollieren sowie Aufpressen für den nächsten Nocken 3. Dies wird solange wiederholt bis der letzte Nocken 3 auf die Welle 2 aufgepresst worden ist.

Die Figuren 2a bis 2e zeigen das Rollieren der Welle 3. In Figur 2a ist die Welle 2 im Bereich der für den später aufzubringenden Nocken noch unbearbeitet. Die Welle 2 besteht aus einem metallischen Material, vorzugsweise Stahl. Sie ist in den meisten Fällen aus Gewichtsgründen rohrförmig ausgestaltet. Selbstverständlich können die Wellen 2 auch über einen vollen Querschnitt verfügen. Die Rollen 13 verfügen über mehrere nebeneinander liegende Rillen in Form von messer- oder schneidartigen Erhebungen 34. Die Rollen bestehen aus einem verschleissfesten Material, welches härter als das zu bearbeitende Wellenmaterial ist. Zumindest im Bereich der messerartigen Erhebungen 34 ist das Material vorzugsweise gehärtet. In Figur 2b wurden die Rollen 13 soweit in x-Richtung gegen die Wellenachse A gedrückt, so dass über den Umfang der Welle 2 durch die messerartigen Erhebungen 34 der Rollen 13 Einschnitte 35 sowie Materialanhäufungen 18 entstehen. In vorliegender Ausführungsform sind die Rollen 13 frei drehbar um eine Achse A_{R} frei drehbar befestigt. Die für den Rolliervorgang notwendige Rotation wird durch die Welle 2 bewirkt, welche um die Achse A drehbar befestigt ist.

Die Figuren 2d und 2e stellen den Aufpressvorgang dar. In Figur 2d ist der Nocken 3 bereits auf die Welle 2 aufgeschoben. Eine Materialver- oder -umformung hat noch nicht stattgefunden. Der Pfeil z zeigt dabei die Aufpressrichtung an. In Figur 2e ist die Welle 2 und der Nocken 3 nach dem Aufpressen dargestellt. In Aufpressrichtung z wurden die Materialanhäufungen 18 umgeformt, wodurch der Nocken 3 fest und nicht lösbar mit der Welle 2 verbunden ist.

Die Figuren 3a und 3b zeigen eine vergrösserte Darstellung der Welle 2 und des Nockens 3 vor bzw. nach dem Aufpressen. In den Ausführungsbeispielen von Figur 3a und 3b wird durch einen voreingestellten Anschlag 17 die Höhe h vorgegeben, bis zu welcher ein Nocken 3 aufgepresst werden soll. Für die richtige Positionierung des Nockens 3 auf der Welle 2 ist neben der Höhe h die richtige Winkellage wichtig. Dazu wird die Welle 2 (mit dem Positionierungselement 7) bereits so auf der Aufpress-Station 5 positioniert, dass die Welle 2 in der richtigen Winkellage liegt, beispielsweise durch ein Voreinstellen der Werkstückaufnahme 6 der Aufpress-Station 5. Alternativ kann auch der Nocken 3 selbst in die richtige Winkellage gebracht werden. Der Nocken 3 wird dann in einer vorgegebenen Lage in z-Richtung auf die Welle 2 aufgepresst. Durch eine Führung 15, welche den Nocken festhält und dafür sorgt, dass der Nocken 3 seine Winkellage während des Aufpressvorganges in Z-Richtung seine Winkellage einhält. Im vorliegenden Ausführungsbeispiel verfügt die Führung 15 über einen Sitz 16, welcher passgenau zum Nocken 3 ausgebildet ist. Die Nockenöffnung 36 ist im Wesentlichen konusartig ausgebildet.

Figur 4 zeigt eine fertig zusammengesetzte Nockenwelle 1 bestehend aus einer Welle 2 als Grundkörper sowie darauf aufgesetzten Nocken 3. Im vorliegenden Ausführungsbeispiel verfügt die Nokkenwelle 1 im Bereich des Wellenendes über eine Nut 28, welche als Positionsreferenz dient. Die in Richtung der Achse A ausgebildete Längs-Nut 28 befindet sich auf einem Wellenabschnitt 40, dessen Durchmesser grösser ist als derjenige des Wellen-Grundkörpers 2. Für verhältnismässig dickwandige rohrförmige oder voll ausgebildete Wellen 2 ist es selbstverständlich auch möglich, die Nut 28 direkt auf den Wellen-Grundkörper 2 anzubringen. Neben seiner Funktion als Positionsreferenz dient die Nut 28 auch dazu, dass die Nockenwelle in einer richtigen Winkellage in einen Verbrennungsmotor eingebaut werden kann, damit die Lage der Kurbelwelle des Verbrennungsmotors und die Lage der Nockenwelle zueinander bestimmt sind. Statt einer Nut 28 sind auch andere Elemente als Positionsreferenzen vorstellbar, beispielsweise statt einer Aussparung wie einer Nut eine Erhebung in Form eines Keils, ein zahnförmiges Profil oder eine Bohrung.

Wie aus Figur 4 hervorgeht, ist die Position eines Nockens 3 durch eine Höhe h und einen Winkel γ definiert. Am Beispiel der Lage bzw. Position des ersten Nockens 3 der Nockenwelle 1 soll dies veranschaulicht werden: Die vorgegebene Höhe h' wird durch das Wellenende 42 und die Stirnfläche 41 des ersten Nockens 3 vorgegeben. Die Höhe h' gibt den Rollierbereich sowie den Aufpressweg vor. Die Winkellage γ' des ersten Nockens wird durch eine feste Referenz bezüglich der Welle 2, wie vorliegend eine Referenzlinie 32, welche durch die Positionsreferenz 28 geht sowie der Symmetrieachse 33' des symmetrisch ausgebildeten Nockens 3, gebildet.

Die Figuren 5a und 5b zeigen eine Welle 2 mit einem daran befestigten Positionierungselement 7, welche in eine Aufpress-Station 5 eingebracht worden sind. In der Figur 5a wird ein erste Nocken 3' aufgepresst, in Figur 5b wird ein zweiter Nocken 3" aufgepresst. Dabei unterscheiden sich die Positionen der beiden Nocken in der Höhe h' bzw. h" sowie in der jeweiligen Winkellage γ' bzw. γ" wie aus den Darstellungen der Schnitte B'-B' bzw. B"-B" deutlich hervorgeht. Der Winkel γ' für die Positionierung des ersten Nockens 3' beträgt gemäss Figur 6a der Einfachheit halber Null. Selbstverständlich kann auch eine andere Anfangslage gewählt werden. Im vorliegenden Beispiel wird der Winkel γ zwischen der Durchmesserlinie 32 durch den Keil 20, welcher zwischen dem Positionierungselement 7 und einer korrespondierenden Werkstückaufnahme 6 verläuft, sowie durch die Linie durch den ersten Nocken 3' gebildet. Die Winkellage γ' wird dabei bereits vor dem Einführen der Welle 2 mit dem mit dieser verbundenen Positionierungselement 7 eingestellt. In den Figuren 5b und 6b ist ein zweiter Nocken 3" auf die Welle 2 aufgepresst. Wie Figur 6b zeigt, ist die definierte Position zum Befestigen der Welle 2 gleich derjenigen wie in Figur 6a. Dabei kann die Aufpress-Station 5 gemäss den Figuren 5b und 6b die gleiche wie bei Figur 5a und 6a oder eine andere Aufpress-Station 5 sein. Die Lage der Werkstückaufnahme 6 ist für die Werkstückaufnahmen 6 der Aufpress-Station 5 fix, der Keil 20 bzw. die Linie 32 sind immer an derselben Stelle. Die richtige Winkellage γ2' für den zweiten Nocken 3" wird eine entsprechende Einstellung des Montagesitzes 16 bewerkstelligt.

Die Figuren 5a bis 6b zeigen ein alternatives Verfahren zum Erstellen der richtigen Winkellage eines Nockens 3, wobei grundsätzlich nur die Figuren 7b und 8b von den vorangegangenen unterscheiden. So zeigt die Figur 8b, dass vor dem zweiten Aufpressvorgang eine Werkstückaufnahme 6 soweit gedreht und dann fixiert wird, dass der Winkel γ2' dem vorgegebenen Winkel entspricht. Der Nocken 3" wird dann von einer für alle Aufpress-Vorgänge fixen Lage auf die Welle 2 aufgepresst. Die fixe Lage kann beispielsweise dadurch gewährleistet werden, dass der Montagesitz 16 für alle Aufpress-Stationen 5 die gleiche Lage aufweist. So stimmt ersichtlicherweise die Linie 33" durch den Nocken 3" mit der Linie 33' gemäss Figur 8a überein.

Figur 9 zeigt eine Nockenwelle 1 mit einem daran befestigten Positionierungselement 7, welche im eine Pressstation 5 eingebracht ist. Dank dem Positionierungselement 7 bzw. der dazu korrespondierenden Werkstückaufnahme 6 muss für die Höhenverstellung lediglich der Montagesitz 16 für den jeweiligen Nocken 3 in z-Richtung verschoben werden. Da die Werkstückaufnahmen 6 der Rollier-Stationen 4 denjenigen der Aufpress-Stationen 5 entsprechen, sind die Positionierung der Rollen für den Rolliervorgang einfach zu bewerkstelligen. Da das Positionierungselement 7 über dem ganzen Bearbeitungsprozess auf der Welle 2 verbleibt, sind auch die jeweiligen Werkstückaufnahmen in den Bearbeitungsstationen 11, einer Rollier-Station 4 und einer Aufpress-Stationen 5 gleich ausgebildet. Dies gilt ebenfalls, wenn mehrere Rollier- bzw. Aufpressstationen vorliegen.

Figur 10 zeigt eine Draufsicht auf eine Werkstückaufnahme 6 und eine Führung 23 für die Höhenverstellung in einer Bearbeitungsstation 11. Dabei wird wie gesehen die Winkellage γ für das Aufpressen eines Nockens durch die Symmetrieachse 33 sowie durch die Gerade 32 gebildet. Eine Rollierstation 4 unterscheidet sich hinsichtlich ihres Unterbaus von einer Aufpressstation 5 im Wesentlichen nur dadurch, dass die Werkstückaufnahme 6 über einen Motor M, vorzugsweise einen gesteuerten Elektromotor, drehbar ist. Dagegen ist die Werkstückaufnahme 6 der Aufpress-Station 5 wenigstens während des Aufpressvorgangs fix mit dem Unterbau 43 der Bearbeitungsstation verbunden.

Wie aus Figur 11 ersichtlich, kann das Positionierungselement 7 als Spannfutter 10 ausgebildet sein. Der Spannfutter 10 weist einen konischen Einführungsbereich 24 aus. Mit dieser Geometrie kann der Spannfutter schnell und passgenau in die korrespondierende Werkstückaufnahme 6 eingeführt werden. Somit ist der Spannfutter kraftschlüssig mit der Werkstückaufnahme 6 verbunden. Zusätzlich kann mit einem Keil 20, welcher passgenau in die Nut 26 des Spannfutter und der Nut 30 der Werkstückaufnahme einlassbar ist, ein Formschluss erzielt werden. Dieser Keil 20 dient einerseits bei der Rollier-Station 4 zur Übertragung der Drehbewegung vom Motor M über die Werkstückaufnahme 6 auf die Welle 2 und andererseits in Bezug auf eine Aufpressstation zum Festlegen der Winkelposition der jeweiligen Nocken 3. Das Spannfutter 10 ist auf die Welle 2 befestigbar, wobei eine Klemmkraft K auf die Welle 2 wirkt, wodurch eine feste Verbindung entsteht.

Figur 13 zeigt ein weiteres Ausführungsbeispiel eines Spannfutter 10, wobei die Verbindung Spannbacken-Welle bzw. Spannbakken-Wellenverbreiterung (27) über eine zusätzliche Positionsreferenz in Form eines Keiles 29 aufweist. Der Spannbacken 10 ist seinerseits in eine korrespondierende Werkstückaufnahme 6 eingespannt.

Ein weiteres Ausführungsbeispiel eines Positionierungselements 7 ist in Figur 13 dargestellt, in der das Positionierelement 7 als Spanndorn 9 ausgebildet ist. Der Spanndorn 9 ist zwecks einfacher Handhabung und passgenauer Einführung in die zugehörige Werkstückaufnahme 6 konisch ausgebildet. Der Spanndorn 9 ermöglicht eine platzsparende Verbindung mit einem rohrförmigen Grundkörper 2. Dabei wird der wellenseitige Teil des Spanndorns 9 in das Rohrende der Welle 2 eingeführt und aufgeweitet, wodurch eine Klemmkraft K für eine feste Verbindung zwischen Welle 2 und Spanndorn 9 sorgt.

Figur 14 zeigt eine Anordnung von Bearbeitungsstationen 11, welche nur über eine Rollier-Station 4 und eine Aufpress-Station 5 aufweist. In dieser Anordnung wird die Welle 2 an der vorgesehenen Stelle in der Rollier-Station 4 rolliert und anschliessend in der Aufpress-Station 5 wird der erste Nocken 3 in der gewünschten Position aufgepresst. Dazu werden die jeweiligen Bearbeitungsstationen voreingestellt. Die Rollen 13 der Rollierstation 4 wurden auf etwa einer Höhe h mechanisch fixiert, so dass die Rollen nur noch in x-Richtung bewegbar sind. In der Aufpress-Station 5 muss neben der richtigen Höheneinstellung die Werkstückaufnahme 6 in der richtigen Winkellage eingestellt und fixiert werden. Auf diese Weise können eine Vielzahl von Nocken 3 bezüglich einer Nockenposition auf eine Vielzahl von Wellen 2 aufgepresst werden. Nachdem alle zu bearbeitenden Wellen 2 (mit den dazugehörigen Positionierungselementen 7) die Bearbeitungsanordnung durchlaufen haben, werden die jeweiligen Bearbeitungsstationen 11, 11', d.h. die Rollier-Station 4 und die Aufpress-Station 5, für eine zweite Position für einen zweiten Nocken 3" neu eingestellt. Dies wird solange wiederholt, bis der letzte Nocken 3 auf die Welle 2 aufgepresst worden ist. Danach kann - falls ein Positionierungselement 7 benutzt worden ist - das Positionierungselement 7 von der Welle 2 bzw. Nockenwelle 1 entfernt werden. Die Beförderung der Welle mit dem jeweiligen Positionierungselement 7 von einer Bearbeitungsstation 11 zur anderen kann manuell oder über eine Manipulationseinrichtung 8 geschehen. Durch die Verwendung von bloss jeweils einer Bearbeitungsstation können kleinere Serien kostengünstig hergestellt werden.

Die Investitionskosten werden drastisch reduziert.

Die jeweiligen Bearbeitungsstationen 11 weisen grundsätzlich immer eine gleich gestaltete Werkstückaufnahme 6 auf. Dies ermöglicht eine Erhöhung der Positioniergenauigkeit.

Weiter ist es auch möglich, mit wenigen Positionierungselementen 7 auszukommen. Im Extremfall genügt einzig ein Positionierungselement 7, welches vorteilhafter Weise als Spannfutter 10 oder Spanndorn 9 ausgebildet ist.

Im Ausführungsbeispiel gemäss Figur 15 ist eine Anordnung mit Bearbeitungsstationen 11 gezeigt, welche sich für hohe Stückzahlen von Nockenwellen 1 eignet. Besonders vorteilhaft ist dabei eine Anordnung, die über genauso viele Bearbeitungsstationen verfügt, wie Nocken 3 auf die Welle 2 aufgepresst werden müssen. Die jeweiligen Bearbeitungsstationen werden vor Beginn einer Serie - wie bereits ausführlich dargestellt - voreingestellt. Diese Anordnung erlaubt nun eine kostengünstige Herstellung hoher Stückzahlen von Nockenwellen 1 sowie eine effiziente und sehr hohe Fertigungsgeschwindigkeit für die Herstellung einer Nockenwelle 1. Da im Wesentlichen nur mit mechanisch fix eingestellten Bearbeitungsstationen 11 gearbeitet wird, erübrigt sich eine komplizierte Steuereinrichtung. Da die jeweiligen Positionen der Bearbeitungsstationen mechanisch, schnell und einfach verstellbar sind, kann die Bearbeitungsstrasse ebenfalls von Maschinenbedienern mit verhältnismässig geringem Ausbildungsgrad bewerkstelligt werden, insbesondere sind keine Programmier- oder CNC-Kenntnisse erforderlich. Jeweils zwei Bearbeitungsstationen, eine Rollier-Station 4 und eine Aufpress-Station 5, welche jeweils denselben Nocken betreffen, können als ein Modul betrachtet werden. Fällt beispielsweise eine AufpressStation 5 in Folge eines technischen Defektes aus, so wird vorzugsweise das ganze Modul ausgewechselt. Somit können grössere Produktionsausfälle schnell und einfach behoben werden. Es ist daher vorteilhaft, bei grossen Stückzahlen, ein Modul als Reserveeinheit zu haben.

Es ist aber auch vorstellbar, Mischformen der vorgenannten Anordnungen zu verwenden. Im Falle von einer mittleren Stückzahl für den Zusammenbau einer Nockenwelle 1 kann es vorteilhaft sein, statt acht Rollier-Stationen 4 und Aufpress-Stationen 5, bloss jeweils 4 Bearbeitungsstationen zu verwenden, das heisst nur vier Rollier-Stationen 4 und vier Aufpress-Stationen 5, womit die Welle 2 zweimal durch die genannte Anordnung laufen muss. Nachdem die ersten vier Bearbeitungsstationen durchlaufen sind, werden diese neu für die nachfolgenden vier Nockenpositionen voreingestellt, was dank den wenigen Einstellungsparametern (h, γ) einfach zu bewerkstelligen ist.

Besonders vorteilhaft werden die Werkstücke, das heisst die Welle mit dem darauf befestigten Positionierungselement 7 sowie den bereits darauf aufgepressten Nocken 3 taktweise über die Manipulationseinrichtung 8 von einer Bearbeitungsstation zur nächsten befördert. Dadurch wird erreicht, dass die Bearbeitungsstrasse ohne Stillstandszeiten arbeiten kann. Die Manipulationseinrichtungen 8 stellen somit sicher, dass alle in den Werkstückaufnahmen 6 der Bearbeitungsstation 11 sich befindenden Werkstücke gleichzeitig weitergefördert werden. Es ist auch vorstellbar, dass gleichzeitig während dem Befördern der Nockenwelle 1 von einer Bearbeitungsstation 11 zur nächsten ein Reinigungsvorgang, beispielsweise mit Hilfe von Druckluft oder mit Hilfe einer Reinigungsflüssigkeit, vorgesehen ist, so dass eine hohe Bearbeitungsqualität der Nockenwelle 1 sichergestellt ist.

## Patentansprüche

1. Anordnung zum Herstellen einer Nockenwelle (1) aus einer Welle (2) und einer Anzahl von darauf aufgepressten Nocken (3), **dadurch gekennzeichnet, dass** die Anordnung wenigstens zwei Bearbeitungsstationen (11) aufweist, von denen wenigstens eine als Rollier-Station (4) und wenigstens eine als Aufpress-Station (5) ausgebildet ist, wobei die Rollier-Station (4) und die Aufpress-Station (5) jeweils eine korrespondierende Werkstückaufnahme (6) zur Aufnahme, insbesondere zur winkelgenauen Aufnahme, der Welle (2) mit Hilfe eines Positionierungselements (7) aufweist.

2. Anordnung zum Herstellen einer Nockenwelle (1) nach Anspruch 1, **dadurch gekennzeichnet, dass** die Anordnung eine Mehrzahl von Rollier-Stationen (4) und jeweils darauffolgend angeordneten Aufpress-Stationen (5) sowie eine Manipulationseinrichtung zum Fördern der Welle jeweils von einer Bearbeitungsstation zur nachfolgenden aufweist.

3. Anordnung zum Herstellen einer Nockenwelle (1) nach Anspruch 1 oder 2, dass das Positionierungselement (7) als Spanndorn (9) oder als Spannfutter (10) ausgestaltet ist.

4. Anordnung zum Herstellen einer Nockenwelle (1) nach einem der Ansprüche 1 bis 3, **dadurch gekennzeichnet, dass** das Positionierungselement (7) komplementär zum Wellenabschluss (42), welcher mit dem Positionierungselement (7) verbindbar ist, ausgestaltet ist.

5. Anordnung zum Herstellen einer Nockenwelle nach einem der Ansprüche 1 bis 4, **dadurch gekennzeichnet, dass** die Werkstückaufnahme (6) für alle Bearbeitungsstationen (11) gleich ausgestaltet ist.

6. Verfahren zur Herstellung einer Nockenwelle (1) aus einer Welle (2) und einer Anzahl von Nocken (3), die in einer Reihe von Bearbeitungsschritten auf die Welle (2) aufgepresst werden, **dadurch gekennzeichnet, dass** ein Positionierungselement (7) vor dem ersten Bearbeitungsschritt an der Welle (2) befestigt wird, dass die Welle (2) mit Hilfe des Positionierungselement (7) auf wenigstens einer Bearbeitungsstation (11) in einer ersten definierten Position für die Dauer eines ersten Bearbeitungsschrittes befestigt wird und dass die Welle mit Hilfe des Positionierungselements (7) auf wenigstens einer weiteren Bearbeitungsstation (11) in einer zweiten definierten Position für die Dauer eines zweiten Bearbeitungsschrittes befestigt wird.

7. Verfahren zur Herstellung einer Nockenwelle (1) nach Anspruch 6, **dadurch gekennzeichnet, dass** im ersten Bearbeitungsschritt die Welle (2) rolliert wird.

8. Verfahren zur Herstellung einer Nockenwelle nach Anspruch 6 oder 7, **dadurch gekennzeichnet, dass** im zweiten Bearbeitungsschritt ein Nocken (3) auf die Welle (2) aufgepresst wird.

9. Verfahren zur Herstellung einer Nockenwelle nach einem der Ansprüche 6 bis 8, **dadurch gekennzeichnet, dass** die Welle (2) auf einer Rollierstation (4) im Bereich der für die Nocken vorgesehenen Positionen rolliert wird, dann in einem zweiten Schritt ein Nocken (3) auf einer Aufpress-Station (5) in der vorgesehenen Position aufgepresst wird und sodann die beiden Schritte für weitere Nocken (3) wiederholt werden.

10. Verfahren zur Herstellung einer Nockenwelle nach einem der Ansprüche 6 bis 9, **dadurch gekennzeichnet, dass** die definierte Position zum Befestigen der Welle (2) mit Hilfe des Positionierungselements (7) auf eine Aufpress-Station (5) oder auf eine Rollier-Station (4) für wenigstens alle Aufpress-Stationen (5) gleich ist und dass die Nocken (3) zum Aufpressen in die richtige Winkellage gebracht werden.

11. Verfahren zur Herstellung einer Nockenwelle nach einem der Ansprüche 6 bis 9, **dadurch gekennzeichnet, dass** die definierte Position zum Befestigen der Welle (2) mit Hilfe des Positionierungselements (7) auf die Aufpress-Stationen (5) jeweils die Winkellage zum Aufpressen des Nockens (3) vorgibt.

12. Verfahren zur Herstellung einer Nockenwelle nach einem der Ansprüche 6 bis 11, **dadurch gekennzeichnet, dass** das Rollieren bzw. das Aufpressen in der jeweils gleichen Rollier-Station (4) bzw. Aufpress-Station (5) durchgeführt wird.

13. Verfahren zur Herstellung einer Nockenwelle nach einem der Ansprüche 6 bis 11, **dadurch gekennzeichnet, dass** das Rollieren bzw. Aufpressen in einer Mehrzahl von jeweils gleichen Rollier-Stationen (4) und/oder Aufpress-Stationen (5) durchgeführt wird.

14. Verfahren zur Herstellung einer Nockenwelle nach einem der Ansprüche 6 bis 11, **dadurch gekennzeichnet, dass** die Welle mit Hilfe des Positionierungselements (7) sequentiell zuerst in einer Werkstückaufnahme (6) der Rollier-Station (4) und dann in einer Werkstückaufnahme (6) der Aufpress-Station (5) befestigt wird.

15. Verfahren zur Herstellung einer Nockenwelle nach einem der Ansprüche 6 bis 14, **dadurch gekennzeichnet, dass** das Positionierungselement (7) nach dem letzten Aufpressen eines Nockens (3) in einer Aufpress-Station (5) von der Welle (2) entfernt wird.

16. Verwendung eines Positionierungselements (7) mit einer Befestigungsanordnung zum form- und/oder kraftschlüssigen Befestigen einer Welle (2), während der zur Herstellung einer Nockenwelle (1) vorgesehenen Bearbeitungsschritte des Rollierens der Welle (2) und Aufpressens von Nocken (3) auf die Welle (2) als Verbindungsteil zum positionsgenauen, insbesondere winkelgenauen Verbinden mit der korrespondierenden Werkstückaufnahme (6) wenigstens eines Rollier-Station (4) und wenigstens einer Aufpress-Station (5).

## Claims

1. An arrangement for the production of a camshaft (1) comprising a shaft (2) and a number of cams (3) which are pressed thereon, **characterised in that** the arrangement has at least two working stations (11) of which at least one is in the form of a rolling station (4) and at least one is in the form of a pressing-on station (5), wherein the rolling station (4) and the pressing-on station (5) each have a respective corresponding workpiece receiving means (6) for receiving and in particular for angularly precisely receiving the shaft (2) by means of a positioning element (7).

2. An arrangement for the production of a camshaft (1) according to claim 1 **characterised in that** the arrangement has a plurality of rolling stations (4) and respective subsequently arranged pressing-on stations (5) as well as a manipulation device for conveying the shaft from a respective working station to the subsequent working station.

3. An arrangement for the production of a camshaft (1) according to claim 1 or claim 2 **characterised in that** the positioning element (7) is in the form of a clamping mandrel (9) or a chuck (10).

4. An arrangement for the production of a camshaft (1) according to one of claims 1 to 3 **characterised in that** the positioning element (7) is of a complementary configuration to the shaft end portion (42) which can be connected to the positioning element (7).

5. An arrangement for the production of a camshaft (1) according to one of claims 1 to 4 **characterised in that** the workpiece receiving means (6) is of the same configuration for all working stations (11).

6. A process for the production of a camshaft (1) comprising a shaft (2) and a number of cams (3) which are pressed on to the shaft (2) in a series of working steps, **characterised in that** a positioning element (7) is fixed to the shaft (2) prior to the first working step, that the shaft (2) is fixed by means of the positioning element (7) on at least one working station (11) in a first defined position for the duration of a first working step, and that the shaft is fixed by means of the positioning element (7) on at least one further working station (11) in a second defined position for the duration of a second working step.

7. A process for the production of a camshaft (1) according to claim 6 **characterised in that** the shaft (2) is rolled in the first working step.

8. A process for the production of a camshaft according to claim 6 or claim 7 **characterised in that** a cam (3) is pressed on to the shaft (2) in the second working step.

9. A process for the production of a camshaft according to one of claims 6 to 8 **characterised in that** the shaft (2) is rolled on a rolling station (4) in the region of the positions intended for the cams, then in a second step a cam (3) is pressed on to the shaft in the intended position on a pressing-on station (5) and then the two steps are repeated for further cams (3).

10. A process for the production of a camshaft according to one of claims 6 to 9 **characterised in that** the defined position for fixing the shaft (2) by means of the positioning element (7) on to a pressing-on station (5) or on to a rolling station (4) is the same for at least all pressing-on stations (5) and that the cams (3) are moved into the correct angular position for the pressing-on operation.

11. A process for the production of a camshaft according to one of claims 6 to 9 **characterised in that** the defined position for fixing the shaft (2) by means of the positioning element (7) on to the pressing-on station (5) respectively predetermines the angular position for pressing the cam (3) on to the shaft.

12. A process for the production of a camshaft according to one of claims 6 to 11 **characterised in that** the rolling operation and the pressing operation respectively is performed in the same respective rolling station (4) and pressing-on station (5).

13. A process for the production of a camshaft according to one of claims 6 to 11 **characterised in that** the rolling operation and the pressing-on operation respectively is performed in a plurality of the same respective rolling stations (4) and/or pressing-on stations (5).

14. A process for the production of a camshaft according to one of claims 6 to 11 **characterised in that** the shaft is fixed by means of the positioning element (7) sequentially firstly in a workpiece receiving means (6) of the rolling station (4) and then in a workpiece receiving means (6) of the pressing-on station (5).

15. A process for the production of a camshaft according to one of claims 6 to 14 **characterised in that** after the last operation of pressing a cam (3) on to the shaft in a pressing-on station (5) the positioning element (7) is removed from the shaft (2).

16. Use of a positioning element (7) with a fixing arrangement for fixing a shaft (2) in positively locking and/or force-locking relationship during the working steps, provided for the production of a camshaft (1), of rolling the shaft (2) and pressing cams (3) on to the shaft (2) as a connecting portion for positionally accurate and in particular angularly accurate connection to the corresponding workpiece receiving means (6) of at least one rolling station (4) and at least one pressing-on station (5).

## Revendications

1. Dispositif pour fabriquer un arbre à cames (1) à partir d'un arbre (2) et d'un certain nombre de cames (3) emmanchées sur celui-ci, **caractérisé en ce qu'**il comprend au moins deux stations d'usinage (11), l'une au moins étant conçue comme une station de roulage (4) et l'une au moins comme une station d'emmanchement (5), étant précisé que la station de roulage (4) et la station d'emmanchement (5) ont chacune un porte-pièce correspondant (6) pour recevoir l'arbre (2), notamment suivant un angle précis, à l'aide d'un élément de positionnement (7).

2. Dispositif pour fabriquer un arbre à cames (1) selon la revendication 1, **caractérisé en ce qu'**il comprend plusieurs stations de roulage (4) et plusieurs stations d'emmanchement (5) disposées à la suite de celles-ci, ainsi qu'un dispositif de manipulation pour acheminer l'arbre d'une station d'usinage à la suivante.

3. Dispositif pour fabriquer un arbre à cames (1) selon la revendication 1 ou 2, **caractérisé en ce que** l'élément de positionnement (7) est conçu comme une broche de serrage (9) ou comme un mandrin de serrage (10).

4. Dispositif pour fabriquer un arbre à cames (1) selon l'une des revendications 1 à 3, **caractérisé en ce que** l'élément de positionnement (7) est complémentaire par rapport à l'extrémité d'arbre (42) apte à être reliée audit élément de positionnement (7).

5. Dispositif pour fabriquer un arbre à cames selon l'une des revendications 1 à 4, **caractérisé en ce que** le porte-pièce (6) a la même forme pour toutes les stations d'usinage (11).

6. Procédé pour fabriquer un arbre à cames (1) à partir d'un arbre (2) et d'un certain nombre de cames (3) qui sont emmanchées sur l'arbre (2) lors d'une série d'étapes d'usinage, **caractérisé en ce qu'**on fixe un élément de positionnement (7) à l'arbre (2) avant la première étape d'usinage, **en ce qu'**on fixe l'arbre (2), à l'aide de l'élément de positionnement (7), sur au moins une station d'usinage (11) dans une première position définie, pour la durée d'une première étape d'usinage, et **en ce qu'**on fixe l'arbre, à l'aide de l'élément de positionnement (7), sur au moins une autre station d'usinage (11) dans une seconde position définie, pour la durée d'une seconde opération d'usinage.

7. Procédé pour fabriquer un arbre à cames (1) selon la revendication 6, **caractérisé en ce que** lors de la première étape d'usinage, l'arbre (2) est soumis à un roulage.

8. Procédé pour fabriquer un arbre à cames selon la revendication 6 ou 7, **caractérisé en ce que** lors de la seconde étape d'usinage, une came (3) est emmanchée sur l'arbre (2).

9. Procédé pour fabriquer un arbre à cames selon l'une des revendications 6 à 8, **caractérisé en ce que** l'arbre (2) est soumis au roulage sur une station de roulage (4) dans la zone des positions prévues pour les cames, puis lors d'une seconde étape d'usinage, une came (3) est emmanchée sur une station d'emmanchement (5), dans la position prévue, et les deux étapes sont ensuite reprises pour d'autres cames (3).

10. Procédé pour fabriquer un arbre à cames selon l'une des revendications 6 à 9, **caractérisé en ce que** la position définie pour la fixation de l'arbre (2) à l'aide de l'élément de positionnement (7) sur une station d'emmanchement (5) ou sur une station de roulage (4) est la même au moins pour toutes les stations d'emmanchement (5), et **en ce que** les cames (3) sont amenées dans la bonne position angulaire en vue de l'emmanchement

11. Procédé pour fabriquer un arbre à cames selon l'une des revendications 6 à 9, **caractérisé en ce que** la position définie pour la fixation de l'arbre (2) à l'aide de l'élément de positionnement (7) sur les stations d'emmanchement (5) prédéfinit à chaque fois la position angulaire pour l'emmanchement de la came (3).

12. Procédé pour fabriquer un arbre à cames selon l'une des revendications 6 à 11, **caractérisé en ce que** le roulage et l'emmanchement sont réalisés dans la même station de roulage (4) et dans la même station d'emmanchement (5), respectivement.

13. Procédé pour fabriquer un arbre à cames selon l'une des revendications 6 à 11, **caractérisé en ce que** le roulage et l'emmanchement sont réalisés dans plusieurs stations de roulage (4) et/ou stations d'emmanchement (5) identiques.

14. Procédé pour fabriquer un arbre à cames selon l'une des revendications 6 à 11, **caractérisé en ce que** l'arbre est tout d'abord fixé dans un porte-pièce (6) de la station de roulage (4) à l'aide de l'élément de positionnement (7), puis dans un porte-pièce (6) de la station d'emmanchement (5).

15. Procédé pour fabriquer un arbre à cames selon l'une des revendications 6 à 14, **caractérisé en ce que** l'élément de positionnement (7) est enlevé de l'arbre (2) après le dernier emmanchement d'une came (3) dans une station d'emmanchement (5).

16. Utilisation d'un élément de positionnement (7) avec un dispositif de fixation pour la fixation d'un arbre (2) par complémentarité de forme et/ou par force, pendant les étapes d'usinage prévues pour la fabrication d'un arbre à cames (1) et comprenant le roulage de l'arbre (2) et l'emmanchement de cames (3) sur celui-ci, comme élément de liaison dans la position exacte et en particulier suivant l'angle exact avec le porte-pièce correspondant (6) d'au moins une station de roulage (4) et d'au moins une station d'emmanchement (5).
